# EUROPÄISCHE PATENTSCHRIFT

(11) **EP 2 628 528 B1**
(45) Veröffentlichungstag und Bekanntmachung des Hinweises auf die Patenterteilung: **15.04.2020**
(21) Anmeldenummer: 13167684.3
(22) Anmeldetag: 14.06.2010
(51) Int. Cl.: B01D 53/86

(54) **Verfahren und Vorrichtung zur Entstickung von Rauchgasen**
Method and apparatus for denitrifying waste gases
Procédé et dispositif destinés à la dénitration de gaz de fumée

(30) Priorität: 15.07.2009 AT 11092009
(43) Veröffentlichungstag der Anmeldung: 21.08.2013
(62) Teilanmeldung aus: 10727333.6
(73) Patentinhaber: Scheuch GmbH, 4971 Aurolzmünster (AT)
(72) Erfinder: Lisberger, Manfred, 4714 Meggenhofen (AT)
(74) Vertreter: Sonn & Partner Patentanwälte

(56) Entgegenhaltungen:
- WO-A1-97/09112
- AT-A4- 505 542
- DE-A1- 4 432 316
- DE-A1- 19 720 205
- US-A1- 2009 130 011

## Beschreibung

Die Erfindung betrifft ein Verfahren gemäß dem Oberbegriff von Anspruch 1.

Die vorliegende Erfindung bezieht sich auf die Entstickung von Kohlenstoffmonoxid und gasförmige organische Stoffe enthaltenden Rauchgasen, die bei der Zementklinkerherstellung anfallen, wo in Drehrohröfen die Rohstoffe, welche für die Zementklinkerbildung erforderlich sind, auf Temperaturen von 1350°C bis 1700°C aufgeheizt werden. Die Rohstoffe werden üblicherweise in einem Vorwärmturm bestehend aus mehreren hintereinander angeordneten Zyklonen vorgewärmt, bevor sie in den Drehrohrofen gelangen. Die Abgase durchströmen den Produktionsprozess im Gegenstrom zum Materialfluss und werden nach dem Verlassen der letzten Zyklonwärmstufe einer Abgasreinigung zugeführt. Bei der Entstickung, die einen Teil der Abluftreinigung darstellt, wird mit sogenannten SCR (selective catalytic reduction)-Katalysatoren durch Zugabe von Ammoniak bzw. Ammoniak abgebenden Verbindungen, wie z.B. Ammoniak-Wasser oder Harnstoff, bei optimaler Betriebstemperatur eine Spaltung der Stickoxide NO_{X} in den Abgasen in umweltneutralen Luftstickstoff N₂ und Wasser H₂O erreicht. Die Abgase gelangen nach einer allfälligen Abkühlung bzw. Wärmerückgewinnung schlussendlich in eine Filterstufe, wo sie entstaubt werden, bevor sie in die Atmosphäre austreten. Die Filterstufe vor dem Austritt der Abgase in die Atmosphäre kann beispielsweise durch Elektro- oder Schlauchfilter gebildet werden.

Der relativ hohe Staubanteil der Rohgase bei der Zementklinkerherstellung, führt zu einer raschen Verstopfung der Katalysatoren. Um die Standzeiten des Katalysators zu erhöhen, werden die Katalysatoren häufig reingasseitig, d.h. nach der Entstaubung der Rohgase, angeordnet. Nachteilig dabei ist, dass die Rauchgase vor der katalytischen Reduktion auf die notwendige Reaktionstemperatur von üblicherweise 160°C bis 500°C erwärmt werden müssen. Diese Erwärmung der Rauchgase erfolgt häufig durch einen Rekuperator bzw. Wärmetauscher, welcher den entstickten Rauchgasen die Wärme entzieht und den Rauchgasen vor der katalytischen Reduktion zuführt. Die Verluste der Wärmeverschiebung des Wärmeaustauschs machen eine zusätzliche Erwärmung der Rauchgase mittels externer Energie unbedingt erforderlich.

Die AT 505 542 B1 beschreibt beispielsweise eine Anlage zur Reinigung der Rauchgase bei der Zementherstellung, wobei die Rauchgase mit zumindest einer Verbrennungseinrichtung zur Stromerzeugung, beispielsweise einer Gasturbine oder einem Gasmotor, die bzw. der insbesondere mit Erdgas betrieben wird, erhitzt werden.

Die DE 197 05 663 A1 beschreibt eine Einrichtung zur Entstickung von Rauchgasen, wobei jedoch aufgrund der bereits hohen Abgastemperatur von etwa 800°C bis 1000°C keine Aufheizung der Gase für die katalytische Reduktion erforderlich ist.

Die US 2009/130011 A1 betrifft ein System und ein Verfahren zur Entstickung von Rauchgasen durch regenerative selektive katalytische Reduktion (RSCR), wobei die Rauchgase in alternierender Richtung durch Kanäle geleitet werden, in welchen Kanälen mehrere Wärmespeichermodule und mehrere Katalysatoren angeordnet sind.

Die DE 197 20 205 A1 beschreibt ein Verfahren und eine Anlage zur Reinigung von Rauchgasen, welche mit Stickoxiden beladen sind. Dabei findet eine reine Entstickung ohne eine Nachverbrennung der Rauchgase statt. Der Katalysator wird immer in einer Richtung von den Rauchgasen durchströmt.

Schließlich zeigt die DE 44 32 316 A1 ein Verfahren und eine Anlage zur Reinigung von Abgasen, wobei die zu reinigenden Abgase kein Kohlenstoffmonoxid enthalten. Die in diesem Dokument erwähnte Nachverbrennung erfolgt nicht zum Zweck der Energierückgewinnung und Verbesserung des Wirkungsgrades, sondern zur Reduktion des bei der katalytischen Reaktion entstehenden Dioxins in den Abgasen.

Die Aufgabe der vorliegenden Erfindung besteht darin, ein Verfahren der oben genannten Art zu schaffen durch welche der Einsatz externer Energie minimiert oder vermieden werden kann und dennoch ein hoher Entstickungsgrad erreicht werden kann. Nachteile bekannter Verfahren bzw. Vorrichtungen sollen reduziert bzw. vermieden werden.

Gelöst wird die erfindungsgemäße Aufgabe durch ein Verfahren mit den Merkmalen von Anspruch 1. Die Nachverbrennung ist zur Reinigung von Rauchgasen bekannt. Darunter wird die Verbrennung von Rauchgasen zur Reduktion der organischen Substanzen verstanden. Bei der thermischen Nachverbrennung sind Verbrennungstemperaturen im Bereich von ca. 750 bis 900 °C üblich. Allenfalls werden zusätzliche Brennstoffe und Verbrennungsluft zugesetzt. Die katalytische Nachverbrennung ist durch einen in der Brennkammer enthaltenen Katalysator, welcher die Oxidationsprozesse beschleunigt, charakterisiert. Dadurch sind niedrigere Verbrennungstemperaturen von ca. 300 bis 500 °C notwendig. Bei der regenerativen Nachverbrennung kann die Zugabe von Brennstoff dadurch stark reduziert werden, dass die Rauchgastemperatur durch Wärmetausch bis fast auf die Verbrennungstemperatur erhöht wird. Erfindungsgemäß ist also vorgesehen, dass das Kohlenstoffmonoxid und/oder die gasförmigen organischen Stoffe in den Rauchgasen nachverbrannt werden. Die bei der Nachverbrennung entstehende Energie wird erfindungsgemäß zur Erhöhung der Temperatur der Rauchgase auf die katalytische Reaktionstemperatur verwendet. Neben der energiesparenden Form der Erwärmung der Rauchgase für die katalytische Reduktion werden auch die in den Rauchgasen enthaltenen Kohlenmonoxide und/oder gasförmigen organischen Stoffe gesenkt. Die notwendige Energiemenge, beispielsweise in Form von Erdgas, kann durch das erfindungsgemäße Verfahren erheblich gesenkt werden, wobei die Zufuhr von externer Energie nur beim Anfahren notwendig ist. Der Aufwand für die Umsetzung des erfindungsgemäßen Verfahrens ist relativ gering und das Verfahren kostengünstig durchführbar. Durch die regenerative Nachverbrennung werden somit die Rauchgase nicht nur entstickt sondern auch deren Kohlenmonoxidgehalt und deren Gehalt an gasförmigen organischen Stoffen reduziert. Durch die Reduktion der gasförmigen organischen Stoffe, insbesondere organischer Verbindungen sogenannter "Volatile Organic Compounds" (VOCs), kann die Geruchsbelastung durch die Rauchgase reduziert werden.

Gemäß einer Ausführungsvariante des erfindungsgemäßen Verfahrens ist vorgesehen, dass die Rauchgase in alternierender Richtung durch mindestens zwei Kanäle mit mehreren aufeinanderfolgenden Wärmespeichermodulen und einem dazwischen angeordneten Raum zur regenerativen Nachverbrennung geleitet werden und die katalytisehe Reduktion der Stickoxide in zwischen den Wärmespeichermodulen angeordneten Katalysatoren durchgeführt wird. Bei dieser Variante des erfindungsgemäßen Entstickungsverfahrens werden Wärmespeichermodule und Katalysatoren in Kanälen kombiniert und durch die alternierende Richtung der Rauchgase den Rauchgasen die für die katalytische Reduktion erforderliche Wärme entzogen. Durch die regenerative Nachverbrennung des Kohlenstoffmonoxids und/oder der gasförmigen organischen Stoffe in den Rauchgasen kann das Verfahren autotherm, d.h. ohne externe Energiezuführung, ablaufen und somit ein hoher Wirkungsgrad erzielt werden.

Zum Starten wird externe Wärmeenergie zugeführt. Diese externe Wärmeenergie kann beispielsweise durch Verbrennung von externen Energieträgern wie z.B. Erdgas oder Erdöl erzeugt werden.

Zur Erhöhung der bei der regenerativen Nachverbrennung erzielbaren Energie können den Rauchgasen vor der regenerativen Nachverbrennung brennbare Substanzen, beispielsweise Erdgas oder Erdöl, zugeführt werden.

Der Gehalt an Kohlenstoffmonoxid oder gasförmigen organischen Stoffen in den Rauchgasen kann durch steuerungstechnische Maßnahmen gezielt erhöht werden. Beispielsweise kann bei der Zementherstellung durch Reduktion der Luftzufuhr im Drehrohrofen der Gehalt an Kohlenstoffmonoxid erhöht und somit die Energiegewinnung durch die regenerative Nachverbrennung verbessert werden.

Vorteilhafterweise werden die Rauchgase zu mindestens 60% entstickt.

Das erfindungsgemäße Verfahren kann mit einer Vorrichtung zur Entstickung von Kohlenstoffmonoxid und gasförmige organische Stoffe enthaltenden Rauchgasen durchgeführt werden, wobei zum Ausgleich der Verluste der Wärmeverschiebung im Wärmetauscher zumindest eine Stufe zur regenerativen Nachverbrennung des Kohlenstoffmonoxids und der gasförmigen organischen Stoffe vorgesehen ist. Die Vorteile der Vorrichtung können den bereits oben genannten Vorteilen des Entstickungsverfahrens entnommen werden.

Bei einer Ausführungsvariante der Entstickungsvorrichtung ist die zumindest eine Nachverbrennungsstufe durch mindestens zwei Kanäle mit mehreren aufeinanderfolgenden Wärmespeichermodulen und einem dazwischen angeordneten Raum zur regenerativen Nachverbrennung gebildet, wobei durch die Kanäle die Rauchgase in alternierender Richtung geleitet werden, wobei pro Kanal zumindest ein Katalysator zur katalytischen Reduktion der Stickoxide zwischen den Wärmespeichermodulen angeordnet ist.

Die Wärmespeichermodule sind vorzugsweise durch keramische Wabenkörper gebildet.

Bei einer alternativen Ausführungsform ist die zumindest eine Nachverbrennungsstufe nach dem zumindest einen Wärmetauscher und vor dem zumindest einen Katalysator angeordnet. Somit werden die auftretenden Verluste der Wärmeverschiebung im Wärmetauscher durch die Nachverbrennungsstufe ausgeglichen und es werden die gewünschten Reaktionstemperaturen von 160°C bis 500°C für die katalytische Reduktion der Rauchgase erzielt.

Gemäß einem weiteren Merkmal der Erfindung ist eine Vorrichtung zur Zuführung von externer Wärmeenergie zum Starten der Entstickung der Rauchgase vorgesehen. Wie bereits oben erwähnt kann die externe Wärmeenergie durch Verbrennung externer Energieträger wie z.B. Erdgas oder Erdöl erzeugt werden.

Um die Nachverbrennung zu verbessern, kann eine Leitung zur Zugabe brennbarer Substanzen, beispielsweise von Erdgas oder Erdöl, vorgesehen sein.

Durch Mittel zur gezielten Erhöhung des Gehalts an Kohlenstoffmonoxid und/oder gasförmigen organischen Stoffen in den Rauchgasen kann die Energieausbeute der regenerativen Nachverbrennung erhöht werden. Wie bereits oben erwähnt können diese Mittel zur gezielten Erhöhung des Gehalts an Kohlenstoffmonoxid und/oder gasförmigen organischen Stoffen beispielsweise durch eine Drossel zur Reduktion der Luftzufuhr in einem Ofen, in welchem die Rauchgase erzeugt werden, gebildet sein. Durch diese verschlechterten Verbrennungsbedingungen im Ofen kann somit der Kohlenstoffmonoxidgehalt und/oder der Gehalt an gasförmigen organischen Stoffen mit geringem technischen Aufwand erhöht werden.

Die vorliegende Erfindung wird anhand der beigefügten Zeichnungen näher erläutert. Darin zeigen:
Fig. 1 eine schematische Darstellung der Anlage zur Zementklinkerherstellung nach dem Stand der Technik;
Fig. 2 eine schematische Ansicht einer Ausführungsform einer Entstickungsvorrichtung für ein Verfahren gemäß der vorliegenden Erfindung; und
Fig. 3 eine weitere Ausführungsform einer Entstickungsvorrichtung für ein Verfahren gemäß der vorliegenden Erfindung.

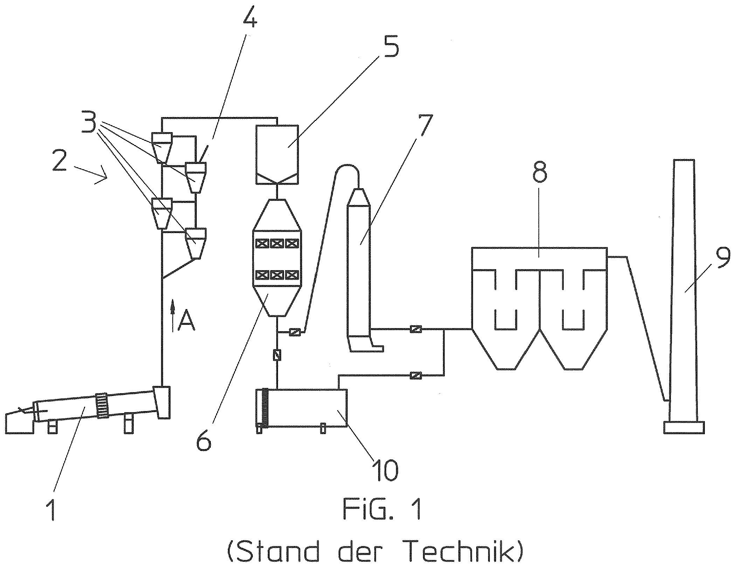

Fig. 1 zeigt eine schematische Ansicht einer Vorrichtung zur Zementklinkerherstellung nach dem Stand der Technik. Die Vorrichtung zur Zementklinkerherstellung besteht aus einer Ofenanlage, insbesondere einem Drehrohrofen 1, in welcher die Rohstoffe zur Herstellung des Zementklinkers gebrannt werden. Üblicherweise werden die Rohstoffe in einem Vorwärmturm 2, der aus einer Vielzahl übereinander angeordneter Zyklone 3 bestehen kann, vorgewärmt. Zu diesem Zweck werden die Rohstoffe über eine Materialaufgabe 4 im Vorwärmturm 2 aufgegeben. Nach dem Gegenstromprinzip gelangt das Rohmaterial in den Drehrohrofen 1, wohingegen die Rauchgase A gegen den Strom des Rohmaterials durch den Vorwärmturm 2 strömen. Nach dem Vorwärmturm 2 gelangen die Rohgase A, welche sowohl Stickoxide NO_{X} als auch Staub enthalten, in einen Filter 5, wo der Staubgehalt der Rohgase A entsprechend reduziert wird. Danach gelangen die Rohgase A in einen Katalysator 6, in welchem durch entsprechende katalytische Reaktion die Stickoxide NO_{X} zum Teil in Stickstoff N₂ und Wasser H₂O umgewandelt werden. Die entstickten Rohgase A werden durch eine allfällige Kühleinrichtung 7 geleitet, um einerseits die Rauchgase A auf eine Temperatur herabzusenken, welche für eine nachfolgende Filterstufe 8 zur Entstaubung der Rauchgase A geeignet ist. Andererseits kann durch eine derartige Kühleinrichtung 7 die in den Rauchgasen A enthaltene Wärme rückgewonnen und zum Erwärmen der Rauchgase A vor dem Katalysator 6 verwendet werden. Nach der Filterstufe 8, die durch Schlauchfilter oder Elektrofilter gebildet sein kann gelangen die entstickten und entstaubten Rauchgase A über einen Schornstein 9 in die Atmosphäre. Nach dem Katalysator 6 gelangt das mit den Rauchgasen A beförderte, gebrannte Rohmaterial des Zementklinkers in eine Mühle 10, wo es vor der Abfüllung auf eine gewünschte Größe vermahlen wird.

Wie bereits erwähnt, ist es durch die Wärmerückgewinnung üblicherweise nicht möglich die Rauchgase A auf die erforderliche Reaktionstemperatur von vorzugsweise 160°C bis 500°C für die katalytische Reduktion im Katalysator 6 aufzuwärmen. Daher ist es nach dem Stand der Technik erforderlich, durch externe Energiezufuhr den Wärmeverlust auszugleichen. Die externe Energiezufuhr ist aufgrund der damit verbundenen Kosten jedoch zu vermeiden.

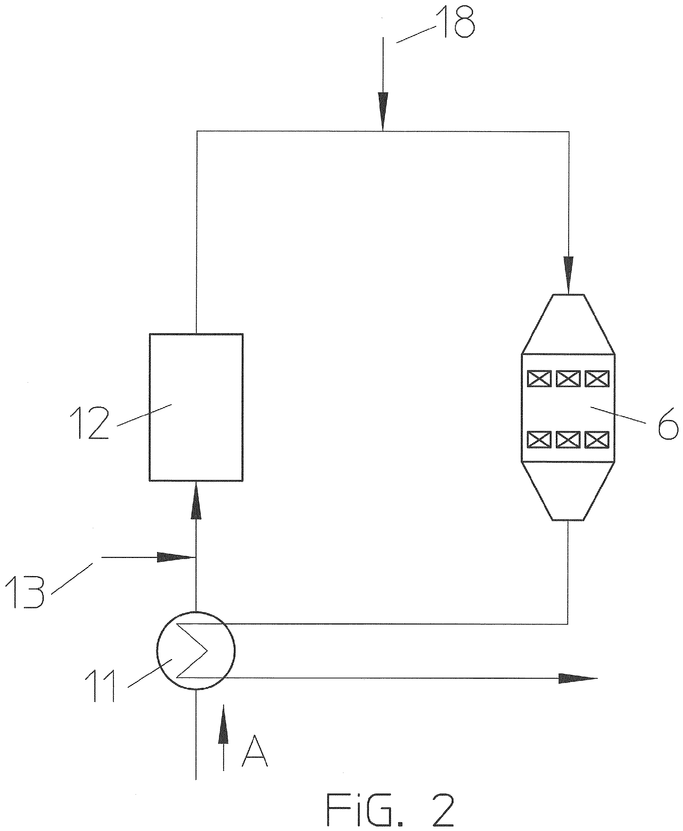

Fig. 2 zeigt eine mögliche Ausführungsform der Erfindung durch regenerative Nachverbrennung des Kohlenstoffmonoxids und/oder der gasförmigen organischen Stoffe in den Rauchgasen A. Die Rauchgase A gelangen nach einer üblichen Filterung (nicht dargestellt) in einen Wärmetauscher 11, wo sie auf die Reaktionstemperatur T_{R} des Katalysators 6 von 160°C bis 500°C erwärmt werden. Der Wärmetauscher 11 entzieht den Rauchgasen im Katalysator 6 und allenfalls nach einer nachfolgenden Filterstufe die Wärmeenergie, sodass die Rauchgase A nach dem Eintritt in den Katalysator 6 auf die Reaktionstemperatur T_{R} gebracht werden. Üblicherweise ist aufgrund der Verluste der Wärmeverschiebung im Wärmetauscher 11 eine Erwärmung der Rauchgase auf die gewünschte Reaktionstemperatur T_{R} nicht möglich und es muss externe Energie zugeführt werden. Bei der Ausführungsform gemäß Fig. 2 werden die Verluste der Wärmeverschiebung im Wärmetauscher 11 dadurch ausgeglichen, dass das Kohlenstoffmonoxid CO und/oder die gasförmigen organischen Stoffe in den Rauchgasen A nachverbrannt werden. Zu diesem Zweck befindet sich zwischen dem Wärmetauscher 11 und dem Katalysator 6 eine Stufe 12 zur regenerativen Nachverbrennung des Kohlenstoffmonoxids CO und/oder der gasförmigen organischen Stoffe der Rauchgase A. Neben Lenkung der externen Energiemenge werden bei Nachverbrennung in der Stufe 12 auch das Kohlenstoffmonoxid CO und/oder die gasförmigen organischen Stoffe in den Rauchgasen reduziert. Die bei der Nachverbrennung in der Stufe 12 entstehenden Stickoxide bzw. in den Rauchgasen enthaltene Stickoxide NO_{X} werden schließlich im Katalysator 6 entfernt. Zum Starten und/oder zum Aufrechterhalten der Betriebstemperatur der Entstickung der Rauchgase A kann eine Vorrichtung 13 zur Zuführung externer Wärmeenergie, beispielsweise eine Erdgasleitung, vor der Nachverbrennungsstufe 12 angeordnet sein. Die erfindungsgemäße Vorrichtung erhöht somit durch die Senkung der externen Energiemenge nicht nur den Wirkungsgrad sondern reduziert sowohl die Stickoxide NO_{X} als auch den hohen Gehalt an Kohlenmonoxid CO und/oder an gasförmigen organischen Stoffen. Durch die Verbrennung des Kohlenmonoxids CO in den Rauchgasen ist der Einbau einer zusätzlichen Lage eines sogenannten Oxidationskatalysators nicht notwendig. Ein Oxidationskatalysator sorgt für die Oxidation des Kohlenstoffmonoxids CO zu Kohlendioxid CO₂. Diese speziellen Katalysatoren sind durch die Dotierung mittels Edelmetalle wie z.B. Platin, Palladium und dergl. sehr kostenintensiv und auch sehr anfällig für die Vergiftung mittels Schwermetalle.

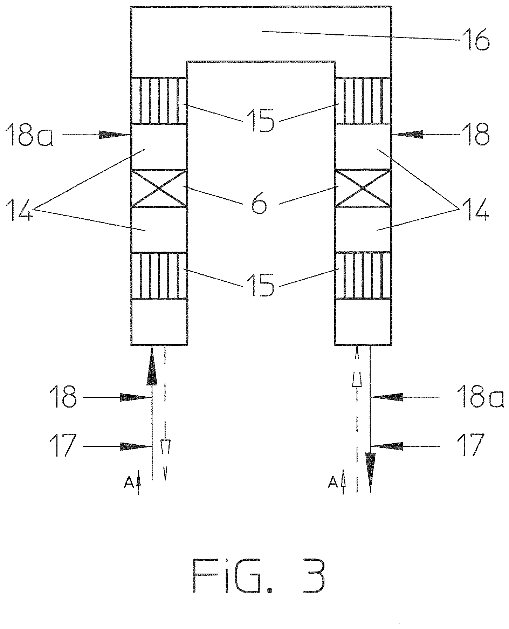

Fig. 3 zeigt eine weitere Ausführungsform der erfindungsgemäßen Entstickungsvorrichtung mit einem kombinierten Wärmespeicher und Katalysator. Bei dieser Ausführungsform werden die Rauchgase A in alternierender Richtung durch zwei Kanäle 14 mit mehreren aufeinanderfolgenden Wärmespeichermodulen 15 und einem dazwischen angeordneten Raum 16 zur regenerativen Nachverbrennung des Kohlenstoffmonoxids CO und/oder der gasförmigen organischen Stoffe der Rauchgase A geleitet. Durch die Durchströmungsrichtung wird den Rauchgasen A in den Wärmespeichermodulen 15 die Wärmeenergie entzogen, welche erforderlich ist um die Rauchgase A auf die Reaktionstemperatur T_{R} der Katalysatoren 6 zu bringen. Über eine Leitung 17 kann Brennstoff wie z.B. Erdgas zugeführt werden. Über entsprechende Leitungen 18 bzw. 18a nach Strömungsumkehr werden die für die katalytische Reduktion in den Katalysatoren 6 erforderlichen Stoffe, vorzugsweise Ammoniak, zugesetzt. Die Steuerung der alternierenden Durchströmungsrichtung erfolgt durch entsprechende Steuereinrichtungen (nicht dargestellt). Die Wärmespeichermodule 15 können durch keramische Wabenkörper gebildet sein. Die Ausführungsvariante gemäß Fig. 3 erfordert Katalysatoren 6 mit einem größeren Bereich der Reaktionstemperatur T_{R}, da die Temperatur durch die alternierende Richtung der Rauchgase A nicht konstant gehalten werden kann. Dafür benötigt man keinen eigenen Wärmetauscher 11, sondern dieser ist durch die Wärmespeichermodule 15 in den Kanälen 14 integriert. Durch den Entfall eines eigenen Wärmetauschers 11 ist der apparative Aufwand auch geringer.

## Patentansprüche

1. Verfahren zur Entstickung von Kohlenstoffmonoxid (CO) und gasförmige organische Stoffe enthaltenden, bei der Zementklinkerherstellung anfallenden Rauchgasen (A) durch selektive katalytische Reduktion der Stickoxide (NOₓ), wobei die Rauchgase (A) vor der katalytischen Reduktion durch Wärmeaustausch der rückgewonnenen Restwärme der entstickten Rauchgase (A) auf eine Reaktionstemperatur (T_{R}) von 160°C bis 500°C erwärmt werden, **dadurch gekennzeichnet, dass** die Verluste der Wärmeverschiebung des Wärmeaustauschs durch regenerative Nachverbrennung des Kohlenstoffmonoxids (CO) und der gasförmigen organischen Stoffe in den Rauchgasen (A) ausgeglichen werden, wobei zum Starten der Entstickung der Rauchgase (A) externe Wärmeenergie zugeführt wird, so dass die Zufuhr von externer Energie nur beim Starten notwendig ist.

2. Verfahren nach Anspruch 1, **dadurch gekennzeichnet, dass** die Rauchgase (A) zu mindestens 60% entstickt werden.

## Claims

1. Method for the denitrification of carbon monoxide (CO) and flue gases (A) which contain gaseous organic substances and are formed during cement clinker production, by selective catalytic reduction of the nitrogen oxides (NOx), the flue gases (A) being heated to a reaction temperature (T_{R}) of from 160°C to 500°C, prior to the catalytic reduction, by heat being exchanged with the recovered residual heat of the denitrified flue gases (A), **characterised in that** the heat transfer losses from the heat exchange are compensated for by regenerative postcombustion of the carbon monoxide (CO) and the gaseous organic substances in the flue gases (A), external heat energy being supplied in order to start up the denitrification of the flue gases (A) such that external energy only needs to be supplied during start-up.

2. Method according to claim 1, **characterised in that** the flue gases (A) are denitrified to at least 60%.

## Revendications

1. Procédé de dénitrification de gaz de fumée (A) contenant du monoxyde de carbone (CO) et des substances organiques gazeuses et produits lors de la fabrication de clinker de ciment par réduction catalytique sélective des oxydes d'azote (NOx), dans lequel les gaz de fumée (A) sont chauffées à une température de réaction (T_{R}) de 160°C à 500°C, par échange de chaleur de la chaleur résiduelle récupérée des gaz de fumée dénitrifiées (A) avant la réduction catalytique, **caractérisé en ce que** les pertes du transfert de chaleur de l'échange de chaleur sont compensées par une postcombustion régénérative du monoxyde de carbone (CO) et des substances organiques gazeuses dans les gaz de combustion (A), dans lequel de l'énergie thermique externe est fournie pour démarrer la dénitrification des gaz de combustion (A), de sorte que l'apport d'énergie externe n'est nécessaire qu'au démarrage.

2. Procédé selon la revendication 1, **caractérisé en ce que** les gaz de fumée (A) sont dénitrifiés à au moins 60%.
